# EUROPEAN PATENT APPLICATION

(11) **EP 2 613 521 A1**
(43) Date of publication of application: **10.07.2013**
(21) Application number: 10856691.0
(22) Date of filing: 01.09.2010
(51) Int. Cl.: H04N 5/445, H04N 5/00, H04N 7/173

(54) **VIDEO OUTPUT DEVICE, REMOTE CONTROL TERMINAL, AND PROGRAM**

(71) Applicant: Suginaka, Junko, Minato-ku, Tokyo 105-0001 (JP)
(72) Inventor: Suginaka, Junko, Minato-ku, Tokyo 105-0001 (JP)
(74) Representative: Appelt, Christian W.
(86) International application number: PCT/JP2010/064898
(87) International publication number: WO 2012/029140

(57) **Abstract**

A video output device such as a television receiver is provided with a subtitle information extracting function for extracting subtitle information from a video signal, and in response to an operation of an operation button on a remote control terminal, subtitle information extracted by the subtitle information extracting means is transmitted to the remote control terminal by infrared communication that uses a transmitting means provided on the video output device and a receiving means provided on the remote control terminal side, and is displayed on a display screen of the remote control terminal. Thus, a video output device set that is capable of displaying subtitle information contained in a video signal on the display screen of the remote control terminal by a simple operation can be provided low in cost.

## Description

### [Technical Field]

The present invention relates to a video output device for extracting subtitle information from a video signal of a video output device such as a television receiver or a video recording/reproduction equipment, and displaying the subtitle information on a display of a remote control terminal, a remote control terminal, and a program.

### [Background Art]

Conventionally, techniques for extracting subtitle information from video signals of video output devices have been known (refer to, for example, Patent Literature 1.).

### [Citation List]

### [Patent Literature]

[Patent Literature 1] JP 2003-333445 A

### [Summary of Invention]

### [Technical Problem]

However, these techniques are for extracting subtitle information from video signals of video output devices, and using the extracted subtitle information by outputting to printers, Braille printers, the Internet, telephone line connections, and the like through input/output units for purposes such as assisting activities of the disabled, and have not been ones that allow using subtitle information simply and easily because the devices are large-sized and high in cost and also require complicated operations.

In light of the above-described problems, it is an obj ect of the present invention to provide a video output device, a remote control terminal and a program, the video output device having a subtitle information extracting function that, by displaying subtitle information on a display of a remote control terminal, can be easily used because a whole set is small-sized and low in cost and can be simply operated.

### [Solution to Problem]

In order to achieve the above-described object, a video output device set according to a first aspect of the present invention is a video output device set consisting of a video output device and a remote control terminal, wherein the video output device comprises: subtitle information extracting means for extracting subtitle information from a video signal;, temporary memory for temporarily storing the subtitle information; and transmitting means for transmitting subtitle information stored in the temporary memory to the remote control terminal, and the remote control terminal comprises an operation button; a display; receiving means for receiving the subtitle information from the video output device; and control means for displaying the subtitle information received by said receiving means on the display by an operation of the operation button.

Moreover, in a video output device set according to a second aspect of the present invention, the remote control terminal comprises a subtitle information memory for accumulating and storing subtitle information input via the transmitting and receiving means.

Moreover, in a video output device set according to a third aspect of the present invention, the transmitting means is by infrared emission, and the receiving means is by infrared photodetection.

Moreover, in a video output device set according to a fourth aspect of the present invention, the temporary memory stores subtitle information contained in n screens (n is a positive integer of 2 or more) of video signals, and the control means transmits subtitle information contained in said n screens of video signals by an operation of the operation button.

Moreover, a video output device according to a fifth aspect of the present invention comprises: subtitle information extracting means for extracting subtitle information from a video signal: temporary memory for temporarily storing the subtitle information; and transmitting means for transmitting subtitle information stored in the temporary memory to a remote control terminal.

Moreover, a remote control terminal according to a sixth aspect of the present invention comprises: an operation button: a display; receiving means for receiving subtitle information from a video output device: and control means for displaying the subtitle information received by said receiving means on the display by an operation of the operation button.

Moreover, a program according to a seventh or eighth aspect of the present invention makes a computer operate as a video output device or remote control terminal of the present invention.

### [Advantageous Effects of Invention]

The video output device set according to the first aspect of the present invention provides an effect of allowing to provide a video output device set having a subtitle information extracting function, the video output device set is small-sized, low in cost, and simple and easy to use.

The video output device set according to the second aspect of the present invention provides an effect of allowing to not only display subtitle information read at that moment but also call up and redisplay subtitle information read in the past.

The video output device set according to the third aspect of the present invention allows using infrared communication that is usually used as a remote control of a video output device for transmission and reception of subtitle information, and therefore provides an effect of allowing to form a video output device set that is lower in cost.

The video output device set according to the fourth aspect of the present invention stores subtitle information contained in a plurality of screens before a point in time of operating the operation button has been operated, and therefore provides an effect of enabling to read past desired subtitle information even if an operation of the operation is late.

### [Brief Description of Drawings]

[Fig. 1] Fig. 1 is a diagram depicting a configuration of a television receiver set according to an example of the present invention.
[Fig. 2] Fig. 2 is a flowchart for explaining the functional operation of a remote control terminal of the present example.

### [Description of Embodiments]

Hereinafter, modes for carrying out the present invention will be described in detail with reference to the accompanying drawings. Here, a television receiver and a remote control terminal are collectively referred to as a television receiver set, and a video output device and a remote control terminal are collectively referred to as a video output device set.

### [Example 1]

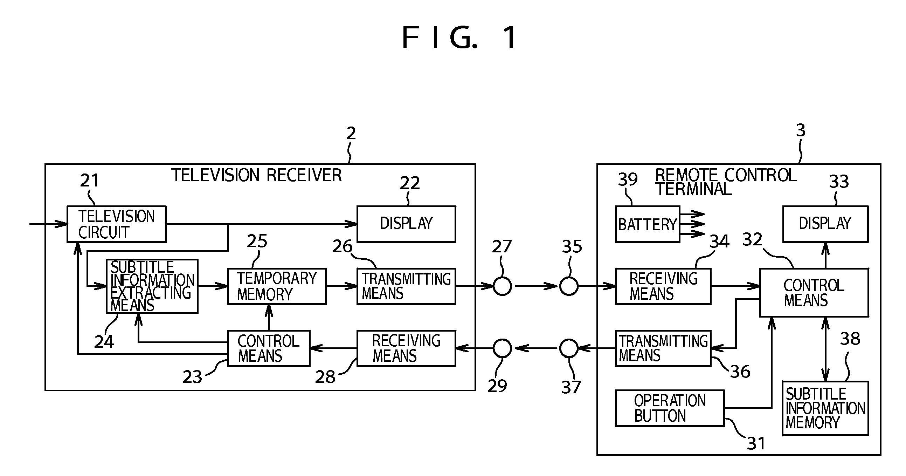

Fig. 1 is a diagram depicting a configuration of a television receiver set according to an example of the present invention. The television receiver set of the present example includes a television receiver 2 and a remote control terminal 3. The television receiver 2 includes a television circuit 21 for processing a received television radio wave to output a video signal, a display 22 for displaying a television screen, a subtitle information extracting means 24 for extracting subtitle information from a video signal that is an output of the television circuit 21, a temporary memory 25 for temporarily storing extracted subtitle information, a control means 23 for controlling the circuit operation of the television receiver 2, a transmitting means 26 and a light-emitting diode 27 for transmitting information to the remote control terminal 3 by infraredcommunication, anda receivingmeans 28 andaphotodiode 29 for receiving information from the remote control terminal 3 by infrared communication.

The remote control terminal 3 includes an operation button 31 for a button operation by a user, a control means 32 for controlling the circuit operation of the remote control terminal, a display 33 concurrently displaying button operation information and subtitle information, a receiving means 34 and a photodiode 35 for receiving information from the television receiver 2 by infrared communication, a transmitting means 36 and a light-emitting diode 37 for transmitting information to the television receiver 2 by infrared communication, a subtitle information memory 38 for accumulating subtitle information, and a battery 39 serving as a circuit power supply of the remote control terminal 3.

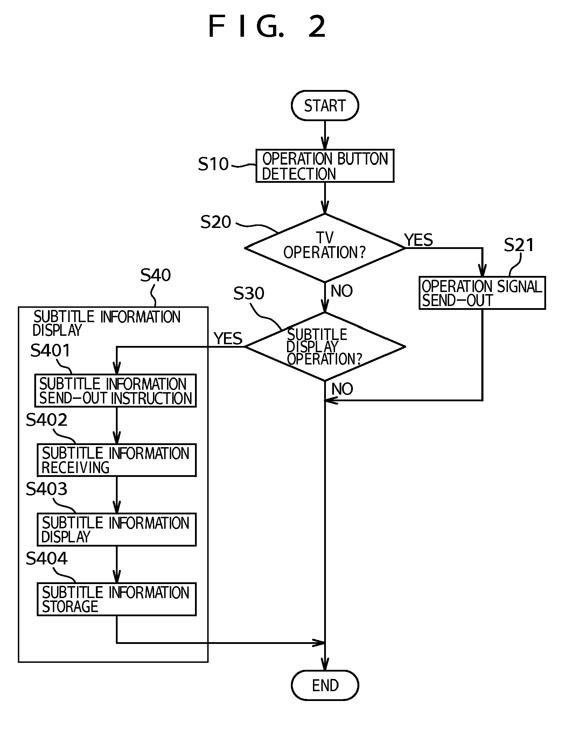

Fig. 2 is a flowchart for explaining the functional operation of the remote control terminal of the present example. Hereinafter, the functions of the television receiver set shown in Fig. 1 will be described using the flowchart of Fig. 2.

First, an ordinary television receiving function will be described. A received television signal is decoded by the television circuit 21 into a video signal, and is screen-displayed by the display 22. An operation of the television receiver by the remote control terminal 3 is performed in the following procedure by use of infrared communication consisting of the transmitting means 36, the light-emitting diode 37, the photodiode 29, and the receiving means 28. When the operation button 31 on the remote control terminal 3 is operated, the control means 32 detects the button operation in an operation button detection step S10, identifies and determines in a television operation determination step S20 that this button operation is, for example, a television operation such as an operation of a television power on/off button or a receiving channel selection button, and follows its YES-side branch to execute an operation signal send-out step S21. In the operation signal send-out step S21, the control means 32 displays a television operation status and information for button operation assistance on the display 33 according to necessity.

In the operation signal send-out step S21, the control means 32 sends out a television operation signal by causing the light-emitting diode 37 to emit light via the transmitting means 36. The sent-out television operation signal is photo-detected by the photodiode 29 of the television receiver 2, and received and decoded by the control means 23 via the receiving mans 28. The control means 23 turns on and off the power supply (not shown) of the television receiver 2 and/or switches reception channels of the television circuit 21 by controlling the television circuit 21 according to the decoded operation content of the operation button 31. The ordinary television function is as above.

Next, a subtitle information displaying function will be described. The received television signal is decoded by the television circuit 21 into a video signal. This video signal is screen-displayed by the display 22 as well as led to the subtitle information extracting means 24, and the subtitle information extracting means 24 extracts subtitle information contained in the video signal in units of one screen, and stores the subtitle information in the temporary memory 25.

If the operation button 31 on the remote control terminal 3 receives, for example, a subtitle display operation such as pushing a subtitle display button (not shown), the control means 32 detects the button operation in the operation button detection step S10, follows the NO side of the television operation determination step S20, identifies and determines in a subtitle display operation determination step S30 that this button operation is a subtitle display operation, and follows its YES-side branch to execute a subtitle information display step S40. The subtitle information display step S40 is a procedure in which a subtitle information send-out instruction step S401, a subtitle information receiving step S402, a subtitle information display step S403, and a subtitle information storage step S404 are executed in order.

In the subtitle information send-out instruction step S401, the control means 32 sends out a subtitle information operation signal by causing the light-emitting diode 37 to emit light via the transmitting means 36. The subtitle information operation signal is photo-detected by the photodiode 29 of the television receiver 2, and received and decoded by the control means 23 via the receivingmans 28. The control means 23 operates the subtitle information extracting means 24 according to the decoding result to extract subtitle information contained in the video signal and store the same in the temporary memory 25, and sends out the extracted subtitle information being the memory content of the temporary memory 25 by infrared communication consisting of the transmitting means 26 and the light-emitting diode 27.

In the subtitle information receiving step S402, the control means 32 photo-detects the subtitle information sent out by the photodiode 35 of the remote control terminal 3, and receives and decodes the same via the receiving means 34. As described above, transmission of subtitle information from the television receiver 2 to the remote control terminal 3 is performed by infrared communication consisted of the transmitting means 26, the light-emitting diode 27, the photodiode 35, and the receiving means 34.
In the subtitle information display step S403, the control means 32 displays the decoded subtitle information on the display 33.

Due to the operation button detection step S10 to the subtitle information display step S403 having been described above, subtitle information contained in a video signal of a screen that is on the display 22 of the television receiver 2 at a point in time where the operation button 31 has been operated is displayed on the display 33 of the remote control terminal 3, and the displayed subtitle information is held until an elapse of a predetermined time (for example, one minute) or an updating display to new subtitle information by an operation of the operation button 31. In addition, when subtitle information contained in one screen exceeds the number of characters that can be displayed by the display 33 of the remote control terminal 3, the control means 32 displays all subtitle information contained in the one screen by first displaying subtitle information of the number of characters that can be displayed on the display 33, and then repeating only a required number of times an operation of displaying not-yet-displayed subtitle information on the display 33 by detecting a predetermined time (for example, 30 seconds) or a remaining information display operation of the display button 31 by the user.

In the subtitle information storage step S404, the control means 32 accumulates and stores the decoded subtitle information screen by screen in the subtitle information memory 38. A display of the subtitle information accumulated and stored in the subtitle information memory 38 onto the display 33 is performed by the control means 32 detecting a subtitle information reproducing operation of the operation button 31 performed by the user, reading out screen by screen the subtitle information stored in the subtitle information memory 38, and displaying the same on the display 33. When subtitle information contained in one screen exceeds the number of characters that can be displayed by the display 33 of the remote control terminal 3, the control means 32 displays all subtitle information contained in the one screen by first displaying subtitle information on the number of characters that can be displayed of the display 33, and then repeating only a required number of times an operation of displaying not-yet-displayed subtitle information on the display 33 by detecting a predetermined time (for example, 30 seconds) or a remaining information display operation of the display button 31 by the user. In addition, when the subtitle information memory 38 has been filled up with stored subtitle information, the stored subtitle information is overwritten with the latest subtitle information in order from the oldest stored subtitle information.

Although transmission of subtitle information from the television receiver 2 to the remote control terminal 3 has been set in the foregoing as infrared communication with a low communication speed of a few kbps to a few tens of kbps and with a short transmission distance of a few meters despite being low in cost as compared with other wireless communication systems, the subtitle information is character entities highly compressed as compared with one video signal itself, and one screen at most contains only a few tens of characters in most cases, and therefore, subtitle information per one screen is usually a few hundred bytes or less, which enables a display with a sufficient sense of being in real time even at the communication speed mentioned above. The subtitle information display function is as above.

As having been described in detail above, the television receiver set according to the present invention allows enj oying a received television picture, while displaying on the display of the remote control terminal subtitle information that will pass in an instant by a simple operation of the remote control terminal that is always at hand, and holding the display content until performing an updating operation, and therefore allows taking time in reading the display content and taking notes.

Moreover, the television receiver set according to the present invention, in which, as shown in the configuration diagram of Fig. 1, the television receiver 2 is one for which the subtitle information extracting means 24, the temporary memory 25, the transmitting means 26, and the light-emitting diode 27 are added to an ordinary television receiver, and the remote control terminal 3 is one for which a photodiode 35, the receiving means 34, and the subtitle information memory 38 are added to an ordinary remote control terminal, therefore has many functions and means that can be shared with an ordinary television receiver set, and are small-sized and low in cost. Particularly, the remote control terminal 3 shares the battery 39, the display 33, the operation button 31, etc., that are major factors in the terminal size and cost, and its effect is large.
It is noted that the present invention is not limited to the above-described example.

In the example of the present invention described in terms of Fig. 1, infrared communication consisted of the transmitting means 36, the light-emitting diode 37, the photodiode 29, and the receiving means 28 for transmitting an operation of the operation button 31 to the control means 23 of the television receiver 2 has been used, and transmission of subtitle information obtained by the subtitle information extracting means 24 has been set as infrared communication consisted of the transmitting means 26, the light-emitting diode 27, the photodiode 35, and the receiving means 34, however, one or both of these may not be infrared communication, and may be, for example, wireless radio communication such as so-called Bluetooth or a wireless LAN.

Moreover, in the example of the present invention described in terms of Fig. 1, the control means 23 having received and decoded a subtitle information operation signal, in the subtitle information send-out instruction step S401, operates the subtitle information extractingmeans 24 to extract subtitle information contained in the video signal and store the same in the temporary memory 25, and sends out the extracted subtitle information by causing the light-emitting diode 27 to emit light via the transmitting means 26. However, in place thereof, while keeping the subtitle information extracting means 24 operating at all times, the control means 23 may send out the extracted subtitle information by operating the temporary memory 25 or the transmitting means 26 according to a decoded subtitle information operation signal to cause the light-emitting diode 27 to emit light.

Moreover, while operating the subtitle information extracting means 24 at all times, and providing the temporary memory 25 with a so-called shift-memory-type memory configuration of storing subtitle information contained in a plurality of pictures (equal to, for example, 15 pictures) in units of pictures every predetermined times (for example, every 0.5 seconds) and causing to always store subtitle information contained in the latest plurality of (for example, 15) pictures by shifting the memory content in units of pictures every time of storage, an operator can cause the display 33 to display subtitle information contained in a desired screen in the past (up to 15 (pictures) x (every) 0.5 (seconds) =7.5 seconds before) even if he/she is late in performing a subtitle display operation of the operation button 31 by the control means 23 sending out the extracted subtitle information by holding the memory content by stopping the shift operation of the temporary memory 25 by a decoded subtitle information operation signal and causing the light-emitting diode 27 to emit light so as to transmit the held memory content via the transmitting means 26,. Moreover, although a description has been given in the above-described example for storing subtitle information contained in a plurality of pictures in units of pictures every predetermined times, the control means 23 may monitor subtitle information that is an output of the subtitle information extracting means 24, and shift and store in the temporary memory 25 subtitle information contained in the screen only when the subtitle information has changed.

Moreover, in the example of the present invention described in terms of Fig. 1, the television receiver 2 has been provided as an ordinary television receiver by the television circuit 21 for processing a received television radio wave to output a video signal, however, a video output device having a similar configuration can form a video output device set according to the present invention as long as it is a video output device from which a video signal containing subtitle information is output, such as a so-called video monitor device having a video input terminal or a video reproducing device with built-in hard disk, DVD, etc.

The video output device and the remote control terminal of the present invention may also be realized by a program to operate a computer as the present video output device or remote control terminal. This program may be stored in a storage medium that can be read by a computer.

This storage medium recorded with the program may be a built-in ROM, or may be a storage medium such as a CD-ROM that can be read, when a program reading device such as a CD-ROM drive is provided as an external storage device, by inserting therein the storage medium.

Moreover, the abovementioned storage medium may be a magnetic tape, a cassette tape, a flexible disk, a hard disk, an MO/MD/DVD or the like, or a semiconductor memory.
All the publications, patents and patent applications cited in the present specification are incorporated in the present specification by reference in their entirety.

**[Reference Signs List]**

| | |
|---|---|
| 2 | Television receiver |
| 3 | Remote control terminal |
| 27 | Light-emitting diode |
| 29 | Photodiode |
| 35 | Photodiode |
| 37 | Light-emitting diode |

## Claims

1. A video output device set consisting of a video output device and a remote control terminal, wherein
the video output device comprises:
subtitle information extracting means for extracting subtitle information from a video signal;
a temporary memory for temporarily storing the subtitle information; and
transmitting means for transmitting the subtitle information stored in the temporary memory to the remote control terminal, and
the remote control terminal comprises:
an operation button;
a display;
receiving means for receiving the subtitle information from the video output device; and
control means for displaying the subtitle information received by said receiving means on the display by an operation of the operation button.

2. The video output device set according to claim 1, wherein the remote control terminal comprises a subtitle information memory for accumulating and storing subtitle information input via the transmitting and receiving means.

3. The video output device set according to claim 1 or 2, wherein the transmitting means is by infrared emission, and the receiving means is by infrared photodetection.

4. The video output device set according to any one of claims 1 to 3, wherein the temporary memory stores subtitle information contained in n screens (n is a positive integer of 2 or more) of video signals, and the control means transmits subtitle information contained in saidn screens of video signals by an operation of the operation button.

5. A video output device comprising:
subtitle information extracting means for extracting subtitle information from a video signal;
a temporary memory for temporarily storing the subtitle information; and
transmitting means for transmitting subtitle information stored in the temporary memory to a remote control terminal.

6. A remote control terminal comprising:
an operation button;
a display;
receiving means for receiving subtitle information from a video output device; and
control means for displaying the subtitle information received by said receiving means on the display by an operation of the operation button.

7. A program which makes a computer operate as
a video output device including subtitle information extracting means for extracting subtitle information from a video signal, a temporary memory for temporarily storing the subtitle information, and transmitting means for transmitting subtitle information stored in the temporary memory to a remote control terminal.

8. A program which makes a computer operate as
a remote control terminal including an operation button, a display, receiving means for receiving subtitle information from a video output device, and control means for displaying the subtitle information received by said receiving means on the display by an operation of the operation button.
